# EUROPEAN PATENT SPECIFICATION

(11) **EP 0 568 232 B1**
(45) Date of publication and mention of the grant of the patent: **04.12.1996**
(21) Application number: 93303010.8
(22) Date of filing: 19.04.1993
(51) Int. Cl.: H04N 5/63, G09G 1/00

(54) **Display system**
Anzeigevorrichtung
Système d'affichage

(30) Priority: 28.04.1992 JP 110324/92
(43) Date of publication of application: 03.11.1993
(73) Proprietor: International Business Machines Corporation, Armonk, N.Y. 10504 (US)
(72) Inventor: Kobayashi, Masaki, Machida-shi, Tokyo-to (JP); Kataoka, Rieko, Yamato-shi, Kanagawa-ken (JP)
(74) Representative: Burt, Roger James, Dr.

(56) References cited:
- EP-A- 0 399 713
- US-A- 3 956 669
- US-A- 4 553 166
- IBM TECHNICAL DISCLOSURE BULLETIN. vol. 34, no. 9, February 1992, NEW YORK US pages 281 - 283 'Increasing lifetime and reliability of crt displays'

## Description

The present invention relates to a display system including a data processing device, such as a personal computer and a display device including a cathode ray tube (CRT).

Display systems which are suitable for use in so-called "Multimedia" applications are required to display motion picture images with high contrast and high luminance. The CRT is a suitable display device for displaying such images since it has a fast response time and can display high contrast and luminance images. However, a high electron beam current is required to display such images. The life time of the CRT can be shortened by use of high electron beam currents. The CRT life time is generally the time period before the luminance of the CRT is degraded to a predetermined level. One parameter determining the life time is the cathode electron emission capability. Electrons are emitted from the oxide cathode by a reduction or deoxidation occurring at the oxide cathode. The higher the rate of the electron emission from the cathode is, the shorter is the life time of the CRT. To display a high load image where substantially all dots are displayed at high luminance, a large amount of the electron emission is required. A conventional CRT for a television set or personal computer has a life time of about 12000 hours and therefore may not be suitable for multimedia applications.

In some conventional display systems to reduce the cathode emission, the displayed image is switched from a normal image to an image requiring a low load at the cathode when the host computer detects no keyboard inputs during a predetermined time period. The personal computer is adapted to generate both video signals of the normal image and video signals of the low load image, and to supply the video signals of the low load image to the CRT display device on detection of no keyboard inputs during the predetermined time period. However the normal operating voltage of the heater element of the CRT is maintained so that the cathode of the CRT is sufficiently activated to effect the reduction. Cathode emission thus continues. In some conventional display systems, to stop cathode emission, the heater element is turned off. When the voltage applied to the heater element is turned off, the heater becomes cold. This approach has the problem that it takes about 10-20 seconds to restore the heater element to normal operation. A drift in convergence and a variation of color balance occur during a transient period before the electrodes in the CRT reach thermal equilibrium. The drift of convergence continues for about 20 minutes and the variation of color balance contines for about one minute. By turning the heater element off while operating voltages are applied to the cathodes, and first and second grids, the cathode becomes semiconducting and breaks down under the influence of the resulting electrostatic field. Undesirable ions from organic material in the CRT are accelerated to the cathode. The surface of the cathode reacts with the ions, leading to a degradation in the cathode emission capability.

In accordance with the present invention, there is now provided a display system comprising: data processing means for generating a video signal, for detecting keyboard inputs, and for generating a control signal on detection of no keyboard inputs during a predetermined time period; and a display device including means connected to said data processing means for amplifying said video signal to generate an amplified video signal varying between a first voltage level representing a lower image luminance and a second voltage level representing a higher image luminance in the absence of the control signal, and for generating a constant voltage signal at a voltage level shifted from said first voltage level toward said second voltage level in response to the control signal, a cathode ray tube including a cathode for receiving said amplified video signal and said constant voltage signal, and voltage supply means for applying a normal operating voltage to a heater element of said cathode ray tube in the absence of the control signal, and for applying a voltage lower than said normal operating voltage to the heater element in response to the control signal.

Viewing a second aspect of the present invention, there is now provided a display system comprising: a data processing means for generating blue, green and red video signals, for detecting keyboard inputs, and for generating a control signal on detection of no keyboard inputs during a predetermined time period; and a display device comprising first means connected to said data processing means to receive said blue video signal for amplifying said blue video signal to generate an amplified blue video signal varying between a first voltage level representing a lower image luminance and a second voltage level representing a higher image luminance in the absence of the control signal generating constant voltage blue signal at a voltage level shifted from said first voltage level toward said second voltage level in response to the control signal, second means connected to said data processing means to receive said green video signal for amplifying said green video signal to generate an amplified green video signal varying between said first voltage level and said second voltage level in the absence of the control signal and for generating a constant voltage green signal at said first voltage level in response to the control signal, third means connected to said data processing means to receive said red video signal for amplifying said red video signal to generate an amplified red video signal varying between said first voltage level and said second voltage level in the absence of the control signal, and for generating a constant voltage red signal at said first voltage level in response to the control signal, a cathode ray tube including three cathodes for receiving the amplified blue, green and red video signals, respectively, and the constant voltage blue, green and red signals, respectively, and voltage supply means for applying a normal operating voltage to a heater element of said cathode ray tube in the absence of the control signal, and for applying a voltage lower than said normal operating voltage to said heater element in response tot the control signal.

A preferred embodiment of the present invention will now be described with reference to the accompanying drawings in which:
Figure 1 is a block diagram of a display device of the present invention;
Figure 2 shows a video amplifying circuit of the present invention;
Figure 3 shows the waveforms at various nodes in the video amplifying circuit;
Figure 4 shows an open collector circuit;
Figure 5 shows a circuit for controlling the heater voltage; and
Figure 6 shows the heater voltage switched between the normal display mode and the image display suppress mode.

The present invention is based upon a realization that the life time of a CRT is remarkably extended by decreasing the temperature of the cathode by 7-30% from its normal operating temperature and by applying a constant voltage signal to the cathode which is shifted from a first voltage level for displaying the lowest luminance of the image toward a second voltage level of the video signals for displaying the highest luminance of the image by 5-25%, so that a constant anode current in the range of 2-14µA flows in the CRT. The 5-25% represents the percentages of the amplitude between the first and second voltage levels. In this condition, a very dim blanket color is displayed on the CRT. This mode of operation is hereinafter called the image display suppress mode, while the mode in which video signals varying between the first and second voltage levels are applied to the cathode is hereinafter called the normal display mode. The decrease in temperature of the cathode lowers the cathode emission, but causes the undesirable reaction of ions with the cathode surface. To solve this problem, the constant anode current in the range of 2-14µA flows when the temperature of the cathode is decreased to prevent the undesirable reaction at the cathode surface. The life time of the CRT can be extended to 40000-44000 hours in the above temperature and current ranges. Particularly, when the decrease in cathode temperature is 10% and the constant anode current is 9-10µA, the life time of the CRT can be extended to around 44000 hours.

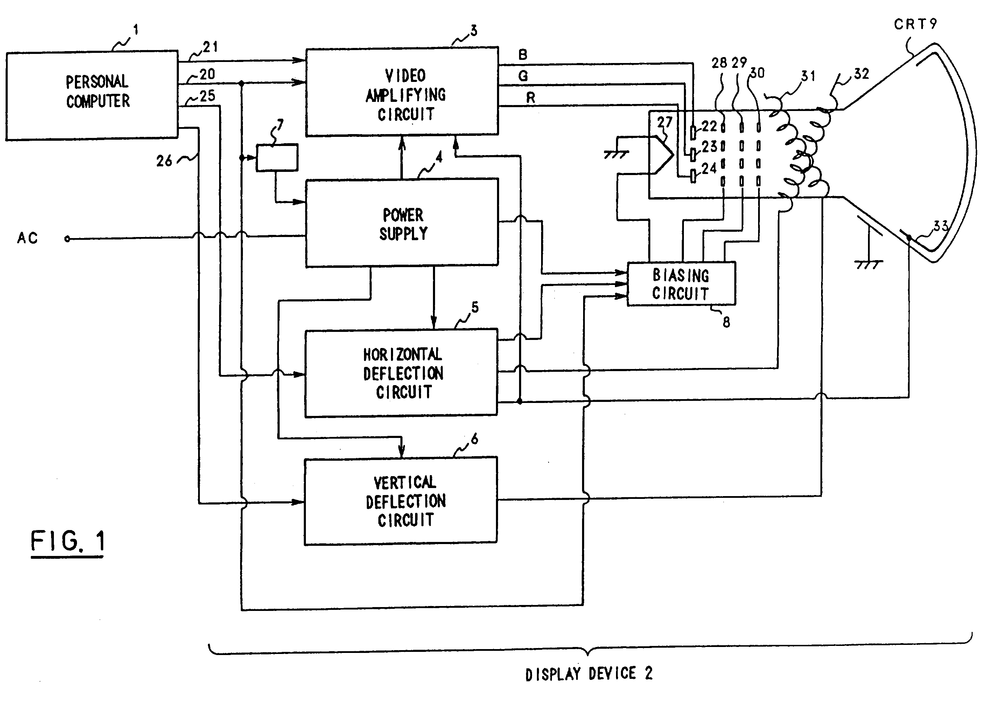

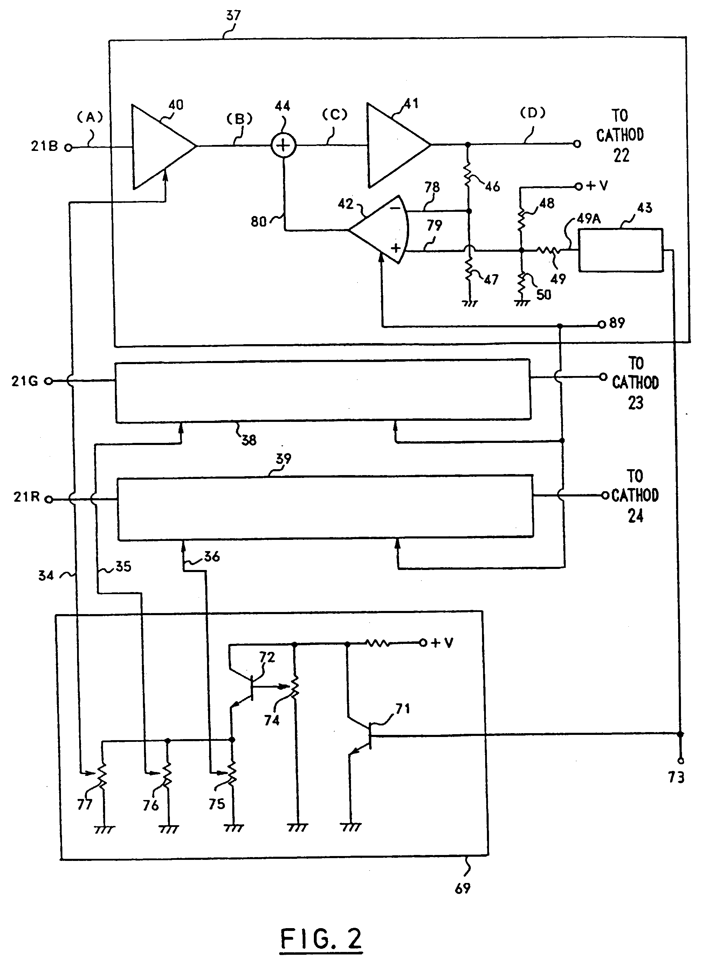

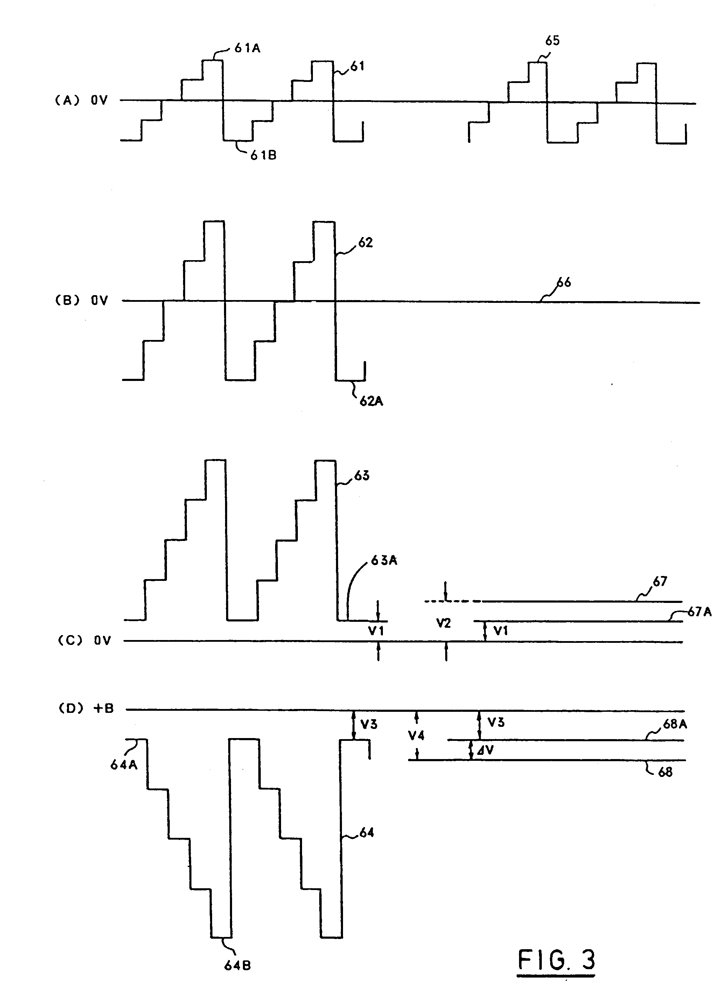

Referring to Figure 1, a display device 2 is connected to a data processing device, such as a personal computer 1. Display device 2 include a video amplifying circuit 3, a power supply circuit 4, a horizontal deflection circuit 5, a vertical deflection circuit 6, a timer circuit 7, a biasing circuit 8 and a CRT 9. Power supply circuit 4, horizontal deflection circuit 5, vertical deflection circuit 6 and CRT 9 are well-known in the art of display design. Power supply circuit 4 receives AC voltage and supplies various voltages to the circuits of display device 2. Horizontal deflection circuit 5 receives horizontal synchronous pulses from personal computer 1 through a line 25, and controls horizontal deflection operation of CRT 9. Vertical deflection circuit 6 receives vertical synchronous pulses from personal computer 1 through a line 26, and controls vertical deflection operation of CRT 9. CRT 9 includes a heater element 27, a cathode 22 receiving a blue (B) video signal, a cathode 23 receiving a green (G) video signal, a cathode 24 receiving a red (R) video signal, a first grid 28 for suppressing the electrons, a second grid 29 for accelerating the electrons, a focus grid 30 for focussing the electron beam,a horizontal deflection coil 31, a vertical deflection coil 32 and a metal back 33. Video amplifying circuit 3 amplifies the blue, green and red video signals from personal computer 1 through a line 21, and supplies the three color video signals to the cathodes 22, 23 and 24, respectively, in a normal display mode in which characters or images from personal computer 1 are displayed on the CRT 9. Video amplifying circuit 3 operates in accordance with the present invention described hereinafter in response to a control signal indicating no keyboard inputs during a predetermined time period supplied from personal computer 1. Referring to Figure 2, a block 37 receives the blue video signal from personal computer 1 at an input terminal 21B. Block 37 includes a pre-amplifier 40, an adder circuit 44, a main amplifier 41, a differential amplifier 42, an open collector circuit 43 and resistors 46, 47, 48, 49 and 50. An output, i.e. the blue video signal, of main amplifier 41 is supplied to the cathode 22 of CRT 9. Blocks 38 and 39 have the same circuit configuration as that of block 37, except that blocks 38 and 39 do not include open collector circuit 43 with the end 49A of resistor 49 connected to the reference level. Block 38 amplifies the green video signal and supplies it to cathode 23 of CRT 9, and block 39 amplifies the red video signal and supplies it to cathode 24 of CRT 9. The waveforms 61-68 at the nodes (A), (B),(C) and (D) in the Figure 2 are shown in Figure 3. The waveforms 61, 62, 63 and 64 are the waveforms in the normal display mode for displaying the characters or image on CRT 9. Video amplifying circuit 3 also includes a gain control circuit 69 and an input terminal 73. Gain control voltages on lines 34, 35 and 36 are controlled by gain control circuit 69 in response to the control signal indicating no keyboard inputs during the predetermined time period, e.g. 30 minutes, supplied from personal computer 1 to input terminal 73 through a line 20 in Figure 1. That is, personal computer 1 has a timer measuring the time period and sets the control signal to a low level when it detects continuous keyboard input operation and sets the control signal to a high level when it detects no keyboard inputs during the predetermined time period. When the low level is supplied to input terminal 73, a transistor 71 is turned off, so that the collector of transistor 71 is maintained at a positive voltage.

In this state, a contrast control voltage divider 74, a voltage divider 75 for adjusting the red color, a voltage divider 76 for adjusting the green color and a voltage divider 77 for adjusting the blue color are adjustable, whereby the gain control voltages on lines 34, 35, and 36 are supplied to pre-amplifier 40 in blocks 37, 38, and 39, respectively. Pre-amplifiers 40 in the blocks 37, 38 and 39 amplify the video signal 61 received at input terminals 21B, 21G and 21R to generate, for example, the wave form 62 shown in the Figure 3 at their respective outputs.

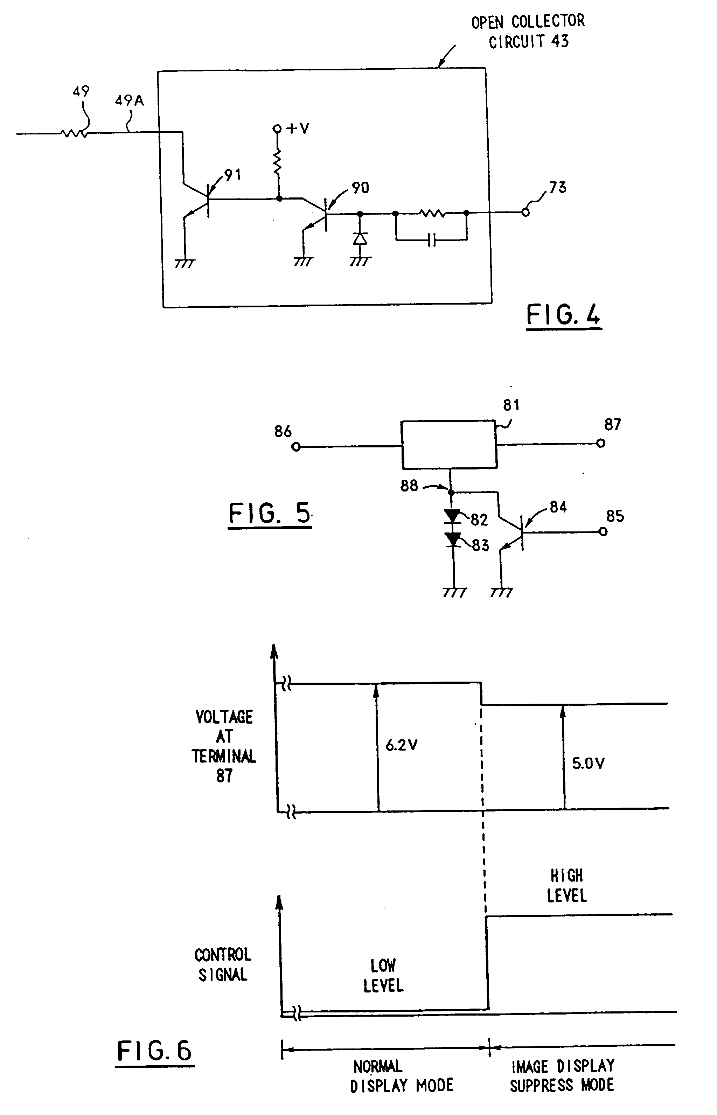

Referring now to the operation of circuit block 37 including differential amplifier 42 and open collector circuit 43, these circuits generate a voltage V1 shown in Figure 3 on a line 80 in response to the control signal of low level at the input terminal 73 for the duration of a clamp signal at a terminal 89. The clamp signal is generated by horizontal deflection circuit 5 during the horizontal retrace period. Block 37 generates a voltage V2 which is higher than voltage V1, on line 80 in response to the control signal of high level. When the control signal of low level, indicating that the operator is keying into the keyboard, is applied to input terminal 73, the end 49A of resistor 49 is connected to the reference voltage or ground potential by open collector circuit 43. The circuit configuration of open collector circuit 43 is shown in Figure 4.

Referring to Figure 4, when the control signal of low level is applied to input terminal 73, a transistor 90 is turned off, and a transistor 91 is turned on, so that line 49A is connected to the reference voltage. When the control signal of high level is applied to the input terminal 73, transistor 90 is turned on, and transistor 91 is turned off. Thus, base current does not flow through the base and emitter of transistor 91, so that line 49A, or the collector of transistor 91 floats. Since line 49A is connected to the reference voltage in the normal display mode, a voltage level on a line 79 is determined by resistors 48, 49 and 50 and a positive voltage + V. Differential amplifier 42 generates voltage V1 shown in Figure 3 in response to the difference between the voltage on lines 78 and 79.

Biasing circuit 8 receives a voltage from power supply 4 and horizontal deflection circuit 5 to generate various voltages for heater element 27, and first, second and focus grids 28, 29, and 30. Since one of two voltage levels applied to heater element 27 in response to the level of the control signal, the portion of biasing circuit 8 for generating the heater voltage is shown in Figure 5. The circuit includes a voltage regulator 81, diodes 82 and 83 and a transistor 84. Voltage regulator 81 generates a higher voltage than a voltage at a connecting node 88 by a predetermined voltage, such as 5V. The voltage on node 88 is switched between two levels, such as 0V and 1.2V in response to the control signal applied to an input terminal 85. The voltage drop across diodes 82 and 83 is 1.2V. When the control signal is low, transistor 84 is turned off, so that the voltage on node 88 is 1.2V. Voltage regulator 81 generates the heater voltage of 6.2V on output terminal 87, as shown in Figure 6. The heater voltage of 6.2V fully activates heater element 27 of CRT 9, shown in the Figure 1, so that the temperature of cathodes 22, 23, and 24 is increased to the normal operating temperature, such as 1100 degrees K, and CRT 9 is operated in normal display mode. When the control signal is high, transistor 84 is turned on, so that the voltage on the node 88 is at 0V. Voltage regulator 81 generates the heater voltage of 5.0 V on output terminal 87, as shown in the Figure 6. By decreasing the heater voltage to the 5.0 V, the temperature of cathodes 22, 23 and 24 is decreased to 1000 K. The temperature of cathodes 22,23 and 24 is thus decreased from normal operating temperature by 9%.

Describing the operation of the circuit shown in Figure 2 in normal display mode with reference to waveforms 61, 62, 63 and 64, when the control signal of low level is supplied from personal computer 1 to display device 2 through line 20, the gain of pre-amplifiers 40 of blocks 37, 38 and 39 is maintained at normal operating gain. The heater voltage is maintained at normal operating voltage, i.e. 6.2V, so that the temperature of the cathodes 22, 23 and 24 is maintained at the normal operating temperature, i.e. 1100 K. Differential amplifier 42 generates lower voltage V1.

Personal computer 1 supplies three video signals, i.e. blue, green and red, to video amplifying circuit 3 through line 21. Blocks 37, 38, 39 receive the blue, green and red video signals, respectively.
Describing the operation of block 37, the blue video signal represented by waveform 61 in Figure 3 is supplied to the pre-amplifier 40. Voltage level 61A represents the highest luminance of the blue image and the voltage level 61B represents the lowest luminance of the blue image. Pre-amplifier 40 amplifies waveform 61 to generate waveform 62, the lowest voltage level 62A of which is clamped at voltage V1 by adding circuit 44, as shown in Figure 3. Main amplifier 41 amplifies waveform 63 to generate waveform 64 with polarity reversed. In other words, main amplifier 41 inversely amplifies waveform 63, so that voltage V1 between the reference voltage OV and the lowest voltage level 63A representing the lowest luminance of the image is amplified to voltage V3 between reference voltage + B, e.g. + 70V, and voltage level 64A, e.g. 65V, representing the lowest luminance of the image. The amplitude of waveform 63 is amplified to the amplitude of waveform 64 between voltage level 64A and voltage level 64B, e.g. 25V. Waveform 64 is supplied to cathode 22 of CRT 9 in Figure 1. When voltage level 64A is applied to cathode 22, electrons are not emitted from cathode 22, so that no blue image is displayed on CRT 9. This is called the lowest luminance of the image. When voltage level 64B is applied to cathode 22, cathode 22 emits electrons. The blue image of the highest luminance is thus displayed. The same operation as above is performed by blocks 38 and 39, whereby the color image is displayed on the CRT 9.

Describing now the operation during suppress mode in accordance with the present invention, when the control signal of high level is supplied from personal computer 1 to display device 2 through line 20, the gains of preamplifiers 40 in blocks 37, 38 and 39 are decreased to zero level. The heater voltage is decreased to 5.0V, so that the temperature of cathodes 22,23 and 24 is decreased to 1000 K. The output voltage of differential amplifier 42 is increased to V2, while differential amplifiers 42 in blocks 38 and 39 generate voltage V1, respectively. Therefore, preamplifiers 40 in all blocks 37, 38 and 39 receive blue, green and red video signals, as shown by waveform 65 in Figure 3, and generate output signals of 0V, as shown by waveform 66. Block 37 has the function of switching the output voltage of differential amplifier 42 to voltage V2 in suppress mode, but blocks 38 and 39 do not have the above switching function. Differential amplifier 42 in blocks 38 and 39 generate voltage V1 in both normal display mode and suppress mode. Therefore, the waveform 66 in block 37 is clamped to voltage V2, as shown by waveform 67, while waveforms 66 in blocks 38 and 39 are clamped to voltage V1, as shown by waveform 67A. Waveform 67 representing the blue signal is supplied to main amplifier 41 in block 37, which amplifies voltage V2 between reference voltage 0V and the voltage level of waveform 67 to voltage V4 between reference voltage level + B and waveform 68. Waveform 67A representing the green or red signal is supplied to main amplifier 41 in blocks 38 and 39, which amplifies voltage V1 to voltage V3. Waveform 68 of the blue image is applied to cathode 22 of CRT 9 and waveforms 68A of the green and the red images are applied to cathodes 23 and 24, respectively. The voltage level of waveform 68 of the blue image is shifted from the voltage levels of waveforms 68A of the green and red images by voltage ΔV. In other words, the constant voltage level of waveform 68 of the blue image is shifted by voltage ΔV from the voltage level of waveform 68A representing the lowest luminance of the image towards voltage level 62B representing the highest luminance of the image. When waveforms 68A of the green and red images are applied to cathodes 23 and 24 of the CRT 9, respectively, no electrons are emitted from cathodes 23 and 24, so that no green and red images are displayed. When waveform 68 of the blue image is applied to cathode 22 of CRT 9, a small amount of electrons are emitted from the cathode 22, so that a weak electron beam current in the range 2-14µA flows in CRT 9. A very light blanket blue color thus is displayed on CRT 9.

In suppress mode, the temperature of cathodes 22, 23, and 24 of CRT 9 is decreased from normal operating temperature, e.g. 1100 K by 7-30%, and the constant voltage level of the blue signal is shifted from the voltage level representing the lowest luminance of the blue image by 5-25%, whereby the weak electron beam current in the range of 2-14µA flows in CRT 9 to display the very light blanket blue color. As described hereinbefore, the decrease of the temperature of the cathode lowers cathode emission, but causes undesirable reaction of ions with the cathode surface. To solve this problem, the constant anode or electron beam current of 2-14 µA is allowed to flow.

The reason for selecting cathode 22 is that the degree that blue stimulates the human eye is relatively low. The fluorescent material from which the three colors are formed on the display surface, as is well known in the art.

As described hereinbefore, display device 2 switches its operational mode between normal display mode and suppress mode in response to the level of the control signal.

Further, timer circuit 7 shown in Figure 1 is provided to detect a lapse of a predetermined time period, e.g. one hour after receipt of the control signal of high level on line 20 to turn power supply circuit 4 off. If the level of the control signal is restored to the low level during the predetermined time period, timer circuit 7 is reset. The purpose of timer circuit 7 is to turn all the circuits in display device 2 off in the following situation. Sometimes, the operator tends to forget to turn display device 2 off when he or she finishes office work or leaves his or her desk a long time. By operation of timer circuit 7, cathode emission is stopped, and power is saved. The present invention can thus extend the life time of the CRT to 40000-44000 hours.

## Claims

1. A display system comprising:
data processing means (1) for generating a video signal (21) for detecting keyboard inputs, and for generating a control signal (20) on detection of no keyboard inputs during a predetermined time period; and
a display device (2) including;
means (3) connected to said data processing means (1) for amplifying said video signal (21) to generate an amplified video signal (B) varying between a first voltage level representing a lower image luminance and a second voltage level representing a higher image luminance in the absence of the control signal (20), and for generating a constant voltage signal at a voltage level shifted from said first voltage level toward said second voltage level in response to the control signal (20),
a cathode ray tube (9) including a cathode (22) for receiving said amplified video signal (B) and said constant voltage signal, and voltage supply means (8) for applying a normal operating voltage to a heater element (27) of said cathode ray tube (9) in the absence of the control signal (20), and for applying a voltage lower than said normal operating voltage to the heater element (27) in response to the control signal (20).

2. A display system as claimed in claim 1, wherein the means connected to the data processing means comprises:
an amplifier for receiving the video signals and having a gain switchable between a normal operating gain to generate the amplified video signals and a reduced gain to generate the constant voltage signal;
gain control means for switching said gain of the amplifier to said normal operating gain in the absence of the control signal and for switching said gain of the amplifier to said reduced gain in response to the control signal; and
means for shifting said constant voltage signal from said first voltage level toward said second voltage level in response to the control signal.

3. A display system as claimed in claim 1 or claim 2, wherein the constant voltage signal is shifted from the first voltage level by 5-25%, and the voltage applied to the heater element is decreased to reduce a temperature of the cathode from its normal operating temperature by 7-30%.

4. A display system comprising:
a data processing means for generating blue, green and red video signals, for detecting keyboard inputs, and or generating a control signal on detection of no keyboard inputs during a predetermined time period; and a display device comprising first means connected to said data processing means to receive said blue video signal for amplifying said blue video signal to generate an amplified blue video signal varying between a first voltage level representing a lower image luminance and a second voltage level representing a higher image luminance in the absence of the control signal generating constant voltage blue signal at a voltage level shifted from said first voltage level toward said second voltage level in response to the control signal,
second means connected to said data processing means to receive said green video signal for amplifying said green video signal to generate an amplified green video signal varying between said first voltage level and said second voltage level in the absence of the control signal and for generating a constant voltage green signal at said first voltage level in response to the control signal,
third means connected to said data processing means to receive said red video signal for amplifying said red video signal to generate an amplified red video signal varying between said first voltage level and said second voltage level in the absence of the control signal, and for generating a constant voltage red signal at said first voltage level in response to the control signal,
a cathode ray tube including three cathodes for receiving the amplified blue, green and red video signals, respectively, and the constant voltage blue, green and red signals, respectively, and
voltage supply means for applying a normal operating voltage to a neater element of said cathode ray tube in the absence of the control signal, and for applying a voltage lower than said normal operating voltage to said heater element in response to the control signal.

5. A display system as claimed in claim 4, wherein the first means comprises:
an amplifier for receiving the blue video signal and having a gain switchable between a normal operating gain to generate the amplified blue video signal varying between the first voltage level and the second voltage level and a reduced gain to generate the constant voltage signal;
a gain control means for switching said gain of the amplifier to the normal operating gain in the absence of the control signal, and for switching said gain of amplifier to the zero gain in response to the control signal; and
means for shifting said constant voltage signal from said first voltage level toward the second voltage level in response to the control signal.

6. A display system as claimed in claim 4 or claim 5, wherein the constant voltage blue signal is shifted from the first voltage level by 5-25%, and the voltage applied to the heater element is decreased to reduce a temperature of the cathode from its normal operating temperature by 7-30%.

## Patentansprüche

1. Anzeigevorrichtung umfassend:
ein Datenverarbeitungsmittel (1) zum Erzeugen eines Videosignals (21), zum Erkennen von Tastatureingaben und zum Erzeugen eines Steuersignals (20), wenn während einer vorgegebenen Zeitspanne keine Tastatureingaben erkannt werden; und
ein Anzeigegerät (2) enthaltend;
ein Mittel, das mit dem Datenverarbeitungsmittel (1) verbunden ist, um das Videosignal (21) zu verstärken, um ein verstärktes Videosignal (B) zu erzeugen, das sich bei Abwesenheit des Steuersignals (20) zwischen einem ersten Spannungspegel, der eine niedrigere Bildhelligkeit darstellt, und einem zweiten Spannungspegel, der eine größere Bildhelligkeit darstellt, verändert, und um ein Konstantspannungssignal auf einem Spannungspegel zu erzeugen, der in Reaktion auf das Steuersignal (20) von dem ersten Spannungspegel in Richtung des zweiten Spannungspegels verschoben wird,
eine Kathodenstrahlröhre (9), die eine Kathode besitzt, um das verstärkte Videosignal (B) und das Konstantspannungssignal zu empfangen, und ein Spannungsversorgungsmittel (8) zum Anlegen einer normalen Betriebsspannung an ein Heizelement (27) der Kathodenstrahlröhre (9) in Abwesenheit des Steuersignals (20) und zum Anlegen einer Spannung an das Heizelement (27), die niedriger als die normale Betriebsspannung ist, in Reaktion auf das Steuersignal.

2. Anzeigevorrichtung gemäß Anspruch 1, wobei das mit dem Datenverarbeitungsmittel verbundene Mittel umfaßt:
einen Verstärker zum Empfangen des Videosignals, der eine Verstärkung besitzt, die zwischen einer normalen Betriebsverstärkung zum Erzeugen des verstärkten Videosignals und einer verminderte Verstärkung zum Erzeugen des Konstantspannungssignals umgeschaltet werden kann;
Verstärkungssteuerungsmittel zum Umschalten der Verstärkung des Verstärkers auf die normale Betriebsverstärkung in Abwesenheit des Steuersignals und zum Umschalten der Verstärkung des Verstärkers auf die verminderte Verstärkung in Reaktion auf das Steuersignal; und
ein Mittel zum Verschieben des Konstantspannungssignals in Reaktion auf das Steuersignal von dem ersten Spannungspegel in Richtung des zweiten Spannungspegels.

3. Anzeigevorrichtung gemäß Anspruch 1 oder Anspruch 2, wobei das Konstantspannungssignal um 5 % bis 25 % von dem ersten Spannungspegel verschoben wird, und wobei die an das Heizelement angelegte Spannung herabgesetzt wird, um die Kathodentemperatur um 7% bis 30 % bezogen auf deren normale Betriebstemperatur zu verringern.

4. Anzeigevorrichtung umfassend:
ein Datenverarbeitungsmittel zum Erzeugen von Blau-, Grünund Rot-Videosignalen, zum Erkennen von Tastatureingaben und zum Erzeugen eines Steuersignals, wenn während einer vorgegebenen Zeitspanne keine Tastatureingaben erkannt werden; und ein Anzeigegerät, das ein erstes Mittel umfaßt, das mit dem Datenverarbeitungsmittel verbunden ist, um das Blau-Videosignal zu empfangen, das Blau-Videosignal zu verstärken, um ein verstärktes Blau-Videosignal zu erzeugen, das sich bei Abwesenheit des Steuersignals zwischen einem ersten Spannungspegel, der eine niedrigere Bildhelligkeit darstellt, und einem zweiten Spannungspegel, der eine größere Bildhelligkeit darstellt, verändert, und um ein Konstantspannungs-Blausignal auf einem Spannungspegel zu erzeugen, der in Reaktion auf das Steuersignal von dem ersten Spannungspegel in Richtung des zweiten Spannungspegels verschoben wird,
ein zweites Mittel, das mit dem Datenverarbeitungsmittel verbunden ist, um das Grün-Videosignal zu empfangen, um das Grün-Videosignal zu verstärken, um ein verstärktes Grün-Videosignal zu erzeugen, das sich in Abwesenheit des Steuersignals zwischen dem ersten Spannungspegel und dem zweiten Spannungspegel verändert, und um in Reaktion auf das Steuersignal ein Konstantspannungs-Grünsignal auf dem ersten Spannungspegel zu erzeugen,
ein drittes Mittel, das mit dem Datenverarbeitungsmittel verbunden ist, um das Rot-Videosignal zu empfangen, um das Rot-Videosignal zu verstärken, um ein verstärktes Rot-Videosignal zu erzeugen, das sich in Abwesenheit des Steuersignals zwischen dem ersten Spannungspegel und dem zweiten Spannungspegel verändert, und um in Reaktion auf das Steuersignal ein Konstantspannungs-Rotsignal auf dem ersten Spannungspegel zu erzeugen,
eine Kathodenstrahlröhre, die drei Kathoden besitzt, um die verstärkten Blau-, Grün- beziehungsweise Rot-Videosignale und die Konstantspannungs-Blau-, Grün- beziehungsweise Rotsignale zu empfangen, und ein Spannungsversorgungsmittel zum Anlegen einer normalen Betriebsspannung an ein Heizelement der Kathodenstrahlröhre in Abwesenheit des Steuersignals und zum Anlegen einer Spannung an das Heizelement, die niedriger als die normale Betriebsspannung ist, in Reaktion auf das Steuersignal.

5. Anzeigevorrichtung gemäß Anspruch 4, wobei das erste Mittel umfaßt:
einen Verstärker zum Empfangen des Blau-Videosignals, der eine Verstärkung besitzt, die zwischen einer normalen Betriebsverstärkung zum Erzeugen des verstärkten Blau-Videosignals, das sich zwischen dem ersten Spannungspegel und dem zweiten Spannungspegel verändert, und einer verminderten Verstärkung zum Erzeugen des Konstantspannungssignals umgeschaltet werden kann;
ein Verstärkungssteuerungsmittel zum Umschalten der Verstärkung des Verstärkers auf die normale Betriebsverstärkung in Abwesenheit des Steuersignals und zum Umschalten der Verstärkung des Verstärkers auf die Verstärkung null in Reaktion auf das Steuersignal; und
ein Mittel zum Verschieben des Konstantspannungssignals in Reaktion auf das Steuersignal von dem ersten Spannungspegel auf den zweiten Spannungspegel.

6. Anzeigevorrichtung gemäß Anspruch 4 oder Anspruch 5, wobei das Konstantspannungs-Blausignal um 5 % bis 25 % von dem ersten Spannungspegel verschoben wird und wobei die an das Heizelement angelegte Spannung herabgesetzt wird, um die Kathodentemperatur um 7% bis 30 % bezogen auf deren normale Betriebstemperatur zu verringern.

## Revendications

1. Système d'affichage comprenant:
un moyen (1) de traitement de données pour générer un signal vidéo (21) afin de détecter des entrées par clavier, et pour générer un signal de commande (20) lors de la détection d'aucune entrée par clavier au cours d'un laps de temps prédéterminé; et
un dispositif d'affichage (2) comportant:
un moyen (3) connecté audit moyen (1) de traitement de données pour amplifier ledit signal vidéo (21) afin de générer un signal vidéo amplifié (B) variant entre un premier niveau de tension représentant une luminance d'image inférieure et un second niveau de tension représentant une luminance d'image supérieure en l'absence du signal de commande (20), et pour générer un signal de tension constante à un niveau de tension décalé par rapport audit premier niveau de tension vers ledit second niveau de tension en réponse au signal de commande (20),
un tube à rayons cathodiques (9) comportant une cathode (22) pour recevoir ledit signal vidéo amplifié (B) afin d'appliquer une tension de fonctionnement normale à un élément de chauffage (27) dudit tube à rayons cathodiques (9) en l'absence du signal de commande (20), et pour appliquer une tension inférieure à ladite tension de fonctionnement normale à l'élément de chauffage (27) en réponse au signal de commande (20).

2. Système d'affichage selon la revendication 1, dans lequel le moyen connecté au moyen de traitement de données comprend:
un amplificateur pour recevoir les signaux vidéo et ayant un gain commutable entre un gain opérationnel normal afin de générer les signaux vidéo amplifiés et un gain réduit afin de générer le signal à tension constante; un moyen de commande de gain pour commuter ledit gain de l'amplificateur audit gain opérationnel normal en l'absence du signal de commande et pour commuter ledit gain de l'amplificateur audit gain réduit en réponse au signal de commande; et
un moyen pour décaler ledit signal de tension constante à partir dudit premier niveau de tension vers ledit second niveau de tension en réponse au signal de commande.

3. Système d'affichage selon la revendication 1 ou la revendication 2, dans lequel le signal de tension constante est décalé entre le premier niveau de tension de 5 - 25 %, et la tension appliquée à l'élément de chauffage est réduite à une température de la cathode entre sa température de fonctionnement normale de 7 - 30 %.

4. Système d'affichage comprenant:
un moyen de traitement de données pour générer des signaux vidéo bleu, vert et rouge, pour détecter des entrées par clavier, et/ou générer un signal de commande lors de la détection d'aucune entrée par clavier au cours d'un laps de temps prédéterminé; et un dispositif d'affichage comprenant un premier moyen connecté audit moyen de traitement de données pour recevoir ledit signal vidéo bleu afin d'amplifier ledit signal vidéo bleu pour générer un signal vidéo bleu amplifié variant entre un premier niveau de tension représentant une luminance d'image inférieure et un second niveau de tension représentant une luminance d'image supérieure en l'absence du signal de commande générant le signal bleu à tension constante à un niveau de tension décalé par rapport audit premier niveau de tension vers ledit second niveau de tension en réponse au signal de commande,
un second moyen connecté audit moyen de traitement de données pour recevoir ledit signal vidéo vert afin d'amplifier ledit signal vidéo vert afin de générer un signal vidéo vert amplifié variant entre ledit premier niveau de tension et ledit second niveau de tension en l'absence du signal de commande et pour générer un signal vers à tension constante audit premier niveau de tension en réponse au signal de commande,
un troisième moyen connecté audit moyen de traitement de données pour recevoir ledit signal vidéo rouge afin d'amplifier ledit signal vidéo rouge afin de générer un signal vidéo rouge amplifié variant entre ledit premier niveau de tension et ledit second niveau de tension en l'absence du signal de commande et pour générer un signal vers à tension constante audit premier niveau de tension en réponse au signal de commande,
un tube à rayons cathodique comportant trois cathodes pour recevoir les signaux bleu, vert et rouge amplifiés, respectivement, et les signaux bleu, vert et rouge à tension constante, respectivement, et un moyen d'alimentation en tension pour appliquer une tension de fonctionnement normale à un élément chauffant dudit tube à rayons cathodiques en l'absence du signal de commande, et pour appliquer une tension inférieure à ladite tension de fonctionnement normale audit élément chauffant en réponse au signal de commande.

5. Système d'affichage selon la revendication 4, dans lequel le premier moyen comprend:
un amplificateur pour recevoir le signal vidéo bleu et ayant un gain commutable entre un gain opérationnel normal afin de générer le signal vidéo bleu amplifié variant entre le premier niveau de tension et le second niveau de tension et un gain réduit pour générer le signal à tension constante;
un moyen de commande de gain pour commuter ledit gain de l'amplificateur au gain de fonctionnement normal en l'absence du signal de commande, et pour commuter ledit gain de l'amplificateur au gain zéro en réponse au signal de commande; et un moyen pour décaler ledit signal à tension constante à partir dudit premier niveau de tension vers le second niveau de tension en réponse au signal de commande.

6. Système d'affichage selon la revendication 4 ou la revendication 5, dans lequel le signal bleu tension constante est décalé à partir du premier niveau de tension de 5 - 25 %, et la tension appliquée à l'élément de chauffage est réduite afin de réduire la température de la cathode depuis sa température de fonctionnement normale de 7 - 30 %.
